# EUROPÄISCHE PATENTSCHRIFT

(11) **EP 1 597 125 B1**
(45) Veröffentlichungstag und Bekanntmachung des Hinweises auf die Patenterteilung: **08.08.2007**
(21) Anmeldenummer: 03815951.3
(22) Anmeldetag: 19.12.2003
(51) Int. Cl.: B60T 8/36, F15B 13/00, G01L 19/14

(54) **DRUCKSTEUERGERÄT**
PRESSURE CONTROLLER
APPAREIL DE COMMANDE DE LA PRESSION

(30) Priorität: 20.02.2003 DE 10307236; 19.09.2003 DE 10343310
(43) Veröffentlichungstag der Anmeldung: 23.11.2005
(73) Patentinhaber: Continental Teves AG & Co. oHG, 60488 Frankfurt (DE)
(72) Erfinder: BECK, Erhard, 35781 Weilburg (DE); HAUPT, Karlheinz, 55435 Gau-Algesheim (DE); BRIESEWITZ, Rüdiger, 60385 Frankfurt am Main (DE)
(86) Internationale Anmeldenummer: PCT/EP2003/014635
(87) Internationale Veröffentlichungsnummer: WO 2004/074061

(56) Entgegenhaltungen:
- WO-A-00/17025
- WO-A-00/63665
- WO-A-96/33081
- WO-A-03/006294
- DE-A- 10 122 330
- DE-A- 19 841 334

## Beschreibung

Die Erfindung betrifft ein Drucksteuergerät, insbesondere für schlupfgeregelte Kraftfahrzeug-Bremsanlagen, nach dem Oberbegriff des Patentanspruchs 1.

Aus der DE 198 41 334 A1 geht bereits ein Drucksteuergerät für eine radschlupfgeregelte Kraftfahrzeug-Bremsanlage hervor, das ein erstes Gehäuse zur Aufnahme von mehreren elektrisch betätigbaren Drucksteuerventilen und ein zweites Gehäuse zur Aufnahme von elektrischen und elektronischen Bauelementen aufweist. Beim Aufsetzen des zweiten Gehäuses auf das erste Gehäuse werden nicht nur die Drucksteuerventile elektrisch kontaktiert, sondern auch mehrere in einem blockförmigen Sensorgehäuse angeordnete Drucksensoren. Das Sensorgehäuse ist von einem Deckel dicht verschlossen, der mit einem dichten Elektrostecker versehen ist, um eine elektrische Verbindung der Drucksensoren mit den elektrischen und elektronischen Bauteilen im zweiten Gehäuse zu ermöglichen. Das Sensorgehäuse bildet mit dem Deckel ein eigenständig handhabbares, baulich aufwendiges Drucksensormodul, das mittels Halteschrauben äußerst präzise zwischen den beiden Gehäusen zu befestigen ist.

Die DE 101 22 330 A1 offenbart ein Drucksteuergerät der gattungsbildenden Art, in dem wenigstens ein an einem Ventilblock befestigter Drucksensor in einem Drucksteuergerät derart integriert ist, dass beim Zusammenfügen des Ventilblocks mit einem elektronischen Regler über federnde elektrische Kontakte eine Leiterplatte des elektronischen Reglers mit dem Drucksensor toleranzausgleichend sowie flüssigkeitsdicht verbunden ist. Der elektronische Regler fasst die gesamte Elektronik des Drucksteuergeräts auf der Leiterplatte zusammen.

Aus WO 03/006294 A ist eine elektrohydraulische Druckregelvorrichtung bekannt, bestehend aus einem Ventilblock, einem auf den Ventilblock aufsetzbaren elektronischen Regler und mehreren in der Druckregelvorrichtung integrierten Drucksensoren, deren Signale mittels eines im elektronischen Regler integrierten Schaltkreis aufbereitet und danach einem elektronischen Rechenwerk zugeleitet werden.

In WO 00/17025 A wird ein elektrohydraulisches Bremssystem mit einem Drucksteuergerät vorgestellt, das aus drei Gehäuseabschnitte besteht, wovon der erste Gehäuseabschnitt eine elektronische Steuerschaltung, der zweite Gehäuseabschnitt mehrere Druckmittelkanäle und der dritte Gehäuseabschnitt wenigstens einen Drucksensor beinhaltet. Zur einfachen Austauschbarkeit des den Drucksensor aufnehmenden dritten Gehäuseabschnitts weist dieser dem ersten Gehäuseabschnitt zugekehrt wenigstens einen elektrischen Anschluss sowie dem zweiten Gehäuseabschnitt zugekehrt wenigstens einen hydraulischen Anschluss auf. Der mit dem Drucksensor versehene dritte Gehäuseabschnitt ist im ersten, die elektronische Steuerschaltung aufweisenden Gehäuseabschnitt aufgenommen sowie an dieser Steuerschaltung angeschlossen.

Aus WO 00/63665 geht ein Drucksensor für ein Bremsgerät hervor, dessen Steuerelektronik zur Messwertauswertung und Steuersignalgenerierung in einem über den Drucksensor gestülpten Gehäuse integriert ist und die elektrische Verbindung zwischen dem Drucksensor und der Steuerelektronik mittels Federkontaktstifte hergestellt ist.

Es ist die Aufgabe der Erfindung, unter Beibehaltung einer möglichst einfachen, von Fertigungs- und Montagetoleranzen unabhängigen elektrischen Drucksensorkontaktierung bauliche Voraussetzungen für eine dezentrale Anordnung einzelner elektronischer Bauelemente innerhalb eines Drucksteuergerätszu schaffen, um eine Konzentration sämtlicher elektronischer Bauelemente auf ein einziges Gehäuse zu vermeiden und dabei gleichzeitig die funktionelle Vorprüfbarkeit des Drucksensors zu verbessern.

Diese Aufgabe wird erfindungsgemäß für ein Drucksteuergerät der eingangs genannten Art mit den kennzeichnenden Merkmalen des Patentanspruchs 1 gelöst.

Weitere Merkmale, Vorteile und Anwendungsmöglichkeiten der Erfindung gehen aus den Unteransprüchen und aus der Beschreibung mehrerer Ausführungsbeispiele anhand von Zeichnungen hervor.

Es zeigen:
- Fig. 1: eine erste Ausführungsform der Erfindung mit einer Teilansicht eines Drucksteuergerätes im Bereich eines Drucksensormoduls, das mit einem separat handhabbaren Gehäuserahmen versehen ist,
- Fig. 2: eine zweite Ausführungsform der Erfindung in einer Teilansicht eines Drucksteuergeräts im Bereich eines Drucksensormoduls, dessen Gehäuserahmen einstückig mit einem ersten Gehäuse verbunden ist,
- Fig. 3: eine dritte Ausführungsform der Erfindung in einer Teilansicht eines Drucksteuergeräts im Bereich eines Drucksensormoduls, dessen Gehäuserahmen einstückig mit dem Drucksensormodul verbunden ist,
- Fig. 4: eine Explosionsdarstellung des Drucksensormoduls.

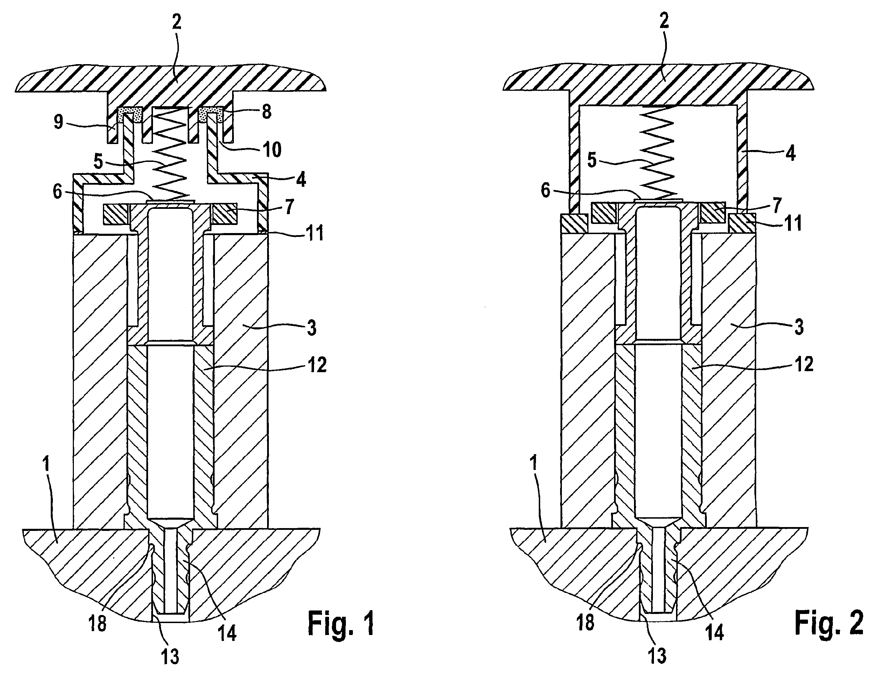

Die Figuren 1-3 zeigen jeweils in schematischer Darstellung ein Drucksensormodul eines Drucksteuergeräts in einer geschnittenen Seitenansicht, das beispielsweise für eine schlupfgeregelte Bremsanlage in einem Kraftfahrzeug verwendet wird. Das Drucksteuergerät umfasst zur Aufnahme von mehreren elektrisch betätigbaren Drucksteuerventilen ein blockförmiges erstes Gehäuse 1 sowie ein deckel- oder plattenförmiges zweites Gehäuse 2, das elektrische und/oder elektronische Bauelemente 5 einer Steuerelektronik aufnimmt. Das zweite Gehäuse 2 ist auf das am ersten Gehäuse 1 befestigtes Drucksensormodul aufgesetzt. Das Drucksensormodul besteht im wesentlichen aus einem blockförmigen Sensorgehäuse 3, das mittels mehrerer Druckrohre 12 am ersten Gehäuse 1 angeflanscht ist.

Bei allen in den Figuren 1-3 abgebildeten Ausführungsbeispielen ist das Sensorgehäuse 3 als rechteckförmiges Blockgehäuse ausgeführt, an dessen vom ersten Gehäuse 1 abgewandte plane Stirnfläche eine Dichtung 11, mehrere Druckmesselemente 6 und eine mit den Druckmesselementen 6 elektrisch verbundene Platine 7 angeordnet ist. Ferner sind in dem Sensorgehäuse 3 mehrere Druckrohre 12 nebeneinander in einer Reihe befestigt, die im Bereich einer am ersten Gehäuse 1 anliegenden Flanschfläche des Sensorgehäuses 3 hervorstehen. Die Druckrohre 12 erstrecken sich mit ihren aus dem Sensorgehäuse 3 hervorstehenden Rohrabschnitten 14 in mehrere Druckkanäle 13 des ersten Gehäuse 1 und sind mittels einer sogenannten Selbstverstemmung dicht mit dem ersten Gehäuse 1 verbunden. Die Druckkanäle 13 stehen mit den elektrisch betätigbaren Drucksteuerventilen in Verbindung, die bevorzugt den Bremsdruck in mehreren Radbremsen eines Kraftfahrzeugs regeln.

Zur einfachen und dennoch sicheren Befestigung und Abdichtung der Druckrohre 13 im ersten Gehäuse 1 mittels einer Selbstverstemmung, weist der Werkstoff der Rohrabschnitte 14 eine größere Härte auf als das Material des ersten Gehäuses 1. Zur Verdrängung des weicheren Materials des ersten Gehäuses 1 in die Ausnehmungen 16 der Rohrabschnitte 14 weisen die Rohrabschnitte 14 Stufenabschnitte 18 auf, die in der Funktion eines Verstemmstempels beim Eindrücken der Rohrabschnitte 14 in die Druckkanäle 13 eine unlösbare, flüssigkeitsdichte Verbindung der Druckrohre 12 mit dem ersten Gehäuse 1 herstellen.

Auch die Druckrohre 12 sind bereits vor dem Einpressen in das erste Gehäuse 1 mittels einer Selbstverstemmung unlösbar und flüssigkeitsdicht mit dem Sensorgehäuse 3 verbunden, weshalb auch der Werkstoff des Sensorgehäuses 3 eine geringere Härte aufweist als das Material der Druckrohre 12, die gleichfalls an ihrem Umfang mit Stufenabschnitte zur Verdrängung des weicheren Materials des Sensorgehäuses 3 in die Ausnehmungen 16 an den Druckrohren 12 versehen sind. Die Druckrohre 12 bestehen bevorzugt aus Stahl, während das erste Gehäuse 1 und das Sensorgehäuse 3 aus einer Leichtmetalllegierung angefertigt sind.

Da das Drucksensormodul entsprechend der bisherigen Darstellung unlösbar mit dem ersten Gehäuse 1 verbunden ist, bedarf es besonderer Maßnahmen, die unabhängig von fertigungs- und Montagetoleranzen eine möglichst einfache, flüssigkeitsdichte und sichere elektrische Verbindung zwischen dem Drucksensormodul und den elektrischen und elektronischen Bauelementen im zweiten Gehäuse 2 gewährleisten.

Die Erfindung schlägt deshalb vor, dass zwischen dem Sensorgehäuse 3 und dem zweiten Gehäuse 2 wenigstens ein Mittel zum Ausgleich von Fertigungs- und Montagetoleranzen angeordnet ist, wozu sich ein elastischer sowie abgedichteter Elektrokontakt 5 besonders gut eignet, der bevorzugt als Federkontakt ausgebildet ist, welcher bei Bedarf zwischen dem Sensorgehäuse 3 und dem zweiten Gehäuse 2 zum Zwecke des Sensorgehäuse 3 und dem zweiten Gehäuse 2 zum Zwecke des Toleranzausgleichs einen radialen bzw. seitlichen Versatz zwischen den Kontaktflächen des zweiten Gehäuses 2 und dem Drucksensormodul zu überbrücken vermag.

In den Figuren 1-3 wurde der Einfachheit halber auf die Darstellung eines Versatzes verzichtet, so dass im Idealzustand das zweite Gehäuse 2 mit seiner elektrischen Kontaktstelle im Vorsprung 9 koaxial zum Drucksensormodul ausgerichtet ist.

Zur Abdichtung des elastischen Elektrokontakts 5 ist zwischen dem Sensorgehäuse 3 und dem zweiten Gehäuse 2 ein Gehäuserahmen 4 vorgesehen. Der bevorzugt als Schraubenfeder ausgeführte Elektrokontakt 5 liegt mit dem Ende einer Federwindung innerhalb des Gehäuserahmens 4 auf einer großzügig bemessenen Kontaktfläche 16 einer Platine 7 mechanisch vorgespannt an. Die Platine 7 nimmt die für mehrere Druckmesselemente 6 erforderlichen elektrischen und/oder elektronischen Bauteile 15 auf, die u.a. eine Drucksignalauswerteschaltung aufnimmt. Hierdurch ergibt sich eine funktionell vorprüfbare Einheit, bevor das Drucksensormodul unlösbar am ersten Gehäuse 1 befestigt wird.

Der Gehäuserahmen 4 taucht mit seinem vom Sensorgehäuse 3 abgewandten Endbereich in eine die Fertigungs- und/oder Montagetoleranzen ausgleichende elastische oder plastische Dichtmasse 8 ein, die innerhalb des an der Unterseite des zweiten Gehäuses 2 angeordneten Vorsprungs 9 in einer Gehäusenut 10 eingespritzt ist. Als Dichtmasse 8 eignet sich besonders gut ein Silikongel.

Die Nutbreite der Gehäusenut 10 ist zum Ausgleich der Montage- und Fertigungstoleranzen um ein hierfür erforderliches Toleranzmaß größer bemessen als die Wandstärke des Gehäuserahmens 4, so dass eine sichere, vor Feuchtigkeit geschützte Abdichtung der empfindlichen elektrischen und/oder elektronischen Bauteile im Drucksensormodul gewährleistet ist.

Im Anschluss an die bisherige allgemeine Darstellung der Erfindung werden nunmehr bezugnehmend auf die Figuren 1-3 einige zweckmäßige Details des Gehäuserahmens näher erläutert.

In der Ausführungsform nach Figur 1 ist der Gehäuserahmen 4 als eigenständig handhabbares Bauteil ausgeführt, dessen vom zweiten Gehäuse 2 abgewandter Endbereich an einer an der Außenkante des Sensorgehäuses 3 umlaufenden Dichtung 11 anliegt. Der Gehäuserahmen 4 besteht vorzugsweise aus einem durch Spritzgießen hergestellten Kunststoff.

Hiervon abweichend zeigt die Figur 2 einen Gehäuserahmen 4, der stoffschlüssig mit dem zweiten Gehäuse 2 verbunden ist, wobei der Gehäuserahmen 4 zum Ausgleich von Fertigungs- und Montagetoleranzen auf einer Dichtung 11 am Sensorgehäuse 3 radial verlagerbar anliegt, die vorzugsweise als Flachdichtung ausgeführt ist. Der Gehäuserahmen 4 ist mit dem zweiten Gehäuse 2 bevorzugt durch Spritzgießen von Kunststoff hergestellt.

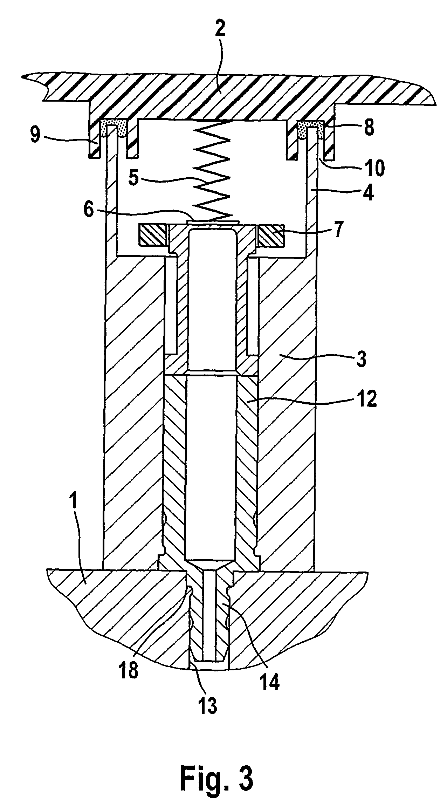

Im Ausführungsbeispiel nach Figur 3 ist der Gehäuserahmen 4 einstückig mit dem Sensorgehäuse 3 verbunden, wobei der auf das zweite Gehäuse 2 gerichtete Endabschnitt des Gehäuserahmens 4 in eine elastische oder plastische Dichtmasse 8 eintaucht, die in einem nutförmigen Vorsprung 9 des zweiten Gehäuses 2 eingebettet ist. Der Gehäuserahmen 4 und das Sensorgehäuse 3 bestehen aus einem massiven Strangpressprofil, dessen Gehäuserahmen 4 mittels einer Fräsoperation auf der Oberseite des Strangpressprofils hergestellt ist.

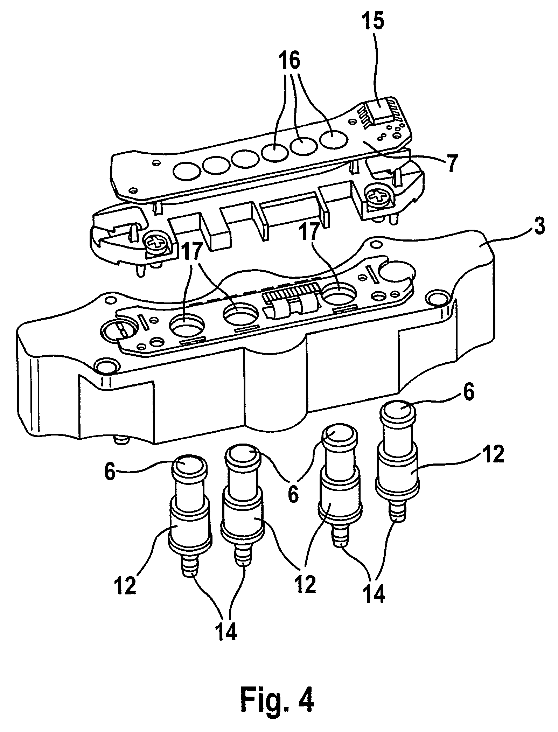

Schließlich zeigt die Figur 4 ausgehend vom Ausführungsbeispiel nach Figur 2 eine Explosionsdarstellung für das Drucksensormodul, dessen schlankes Sensorgehäuse 3 mit mehreren in einer Reihe angeordneten vier Bohrungen 17 versehen ist, in die von unten die abgebildeten vier Druckrohre 12 eingepresst werden. Die Druckrohre 12 weisen auf ihrer Oberseite die Druckmesselemente 6 auf, die nach dem Einpressen der Druckrohre 12 in die Bohrungen 17 vorzugsweise mittels flexibler Kontaktdrähte an der Platine 7 angeschlossen werden. Die Platine 7 befindet sich oberhalb einer massiven Trägerplatte, die nach dem Aufsetzen auf der Oberseite des Sensorgehäuses 6 fest miteinander verbunden sind. Auf der Oberseite der Platine 7 ist ein elektronisches Bauteil 15 angeordnet, das eine Auswerteschaltung für die Drucksignale der Druckmesselemente 6 beinhaltet. Gut zu erkennen sind ferner auf der Oberseite der Platine 7 mehrere kreisrunde, in einer Reihe angeordnete Kontaktflächen 16, auf denen die vorzugsweise an der Unterseite des zweiten Gehäuses 2 befestigten Elektrokontakte 5 zur Anlage gelangen.

### Bezugszeichenliste

- 1: Gehäuse
- 2: Gehäuse
- 3: Sensorgehäuse
- 4: Gehäuserahmen
- 5: Elektrokontakt
- 6: Druckmesselement
- 7: Platine
- 8: Dichtmasse
- 9: Vorsprung
- 10: Gehäusenut
- 11: Dichtung
- 12: Druckrohr
- 13: Druckkanal
- 14: Rohrabschnitt
- 15: Bauteil
- 16: Kontaktfläche
- 17: Bohrung
- 18: Stufenabschnitt

## Patentansprüche

1. Drucksteuergerät, insbesondere für eine schlupfgeregelte Bremsanlage in einem Kraftfahrzeug, das zur Aufnahme von mehreren Drucksteuerventilen mit einem ersten Gehäuse (1) und mit einem auf dem ersten Gehäuse (1) angeordneten zweiten Gehäuse (2) versehen ist, das elektrische und/oder elektronische Bauelemente aufnimmt, die beim Aufsetzen des zweiten Gehäuses (2) auf das erste Gehäuse (1) mehrere in einem Sensorgehäuse (3) angeordnete Drucksensoren elektrisch kontaktieren, mit wenigstens einem zwischen dem Sensorgehäuse (3) und dem zweiten Gehäuse (2) angeordneten Mittel zum Ausgleich von Fertigungs- und Montagetoleranzen, das als ein elastischer Elektrokontakt (5) ausgeführt ist, der zwischen dem Sensorgehäuse (3) und dem zweiten Gehäuse (2) radial verlagerbar angeordnet ist, mit einem zwischen dem Sensorgehäuse (3) und dem zweiten Gehäuse (2) angeordneten Gehäuserahmen (4) zur Abdichtung des elastischen Elektrokontakts (5), der innerhalb des Gehäuserahmens (4) auf einer Kontaktfläche einer Platine (7) mechanisch vorgespannt anliegt, **dadurch gekennzeichnet, dass** die Platine (7) die für wenigstens ein Druckmesselement (6) erforderlichen elektrischen und/oder elektronischen Bauteile (15) einer Drucksignalauswerteschaltung aufnimmt.

2. Drucksteuergerät nach Anspruch 1, **dadurch gekennzeichnet, daß** der Elektrokontakt (5) als ein Federkontakt ausgebildet ist,

3. Drucksteuergerät nach Anspruch 1, **dadurch gekennzeichnet, daß** der Gehäuserahmen (4) mit seinem vom Sensorgehäuse (3) abgewandten Endbereich in einer vorzugsweise Fertigungs- und/oder Montagetoleranzen ausgleichenden elastischen oder plastischen Dichtmasse (8) eingetaucht ist, die entweder innerhalb eines am zweiten Gehäuse (2) angeordneten Vorsprungs (9), insbesondere in einer Gehäusenut (10) des zweiten Gehäuses (2) eingespritzt oder eingelegt ist, deren Nutbreite zum Ausgleich von Montage- und Fertigungstoleranzen um ein hierfür erforderliches Toleranzmaß größer bemessen ist als die Wandstärke des Gehäuserahmens (4).

4. Drucksteuergerät nach Anspruch 1, **dadurch gekennzeichnet, daß** der Gehäuserahmen (4) als eigenständig handhabbares Bauteil ausgeführt ist, dessen vom zweiten Gehäuse (2) abgewandter Endbereich an einer an der Außenkante des Sensorgehäuses (3) umlaufenden Dichtung (11) anliegt.

5. Drucksteuergerät nach Anspruch 1, **dadurch gekennzeichnet, daß** der Gehäuserahmen (4) stoffschlüssig mit dem zweiten Gehäuse (2) verbunden ist, wobei der Gehäuserahmen (4) auf einer Dichtung (11) am Sensorgehäuse (3) radial verlagerbar anliegt, die vorzugsweise als Flachdichtung ausgeführt ist.

6. Drucksteuergerät nach Anspruch 1, **dadurch gekennzeichnet, daß** der Gehäuserahmen (4) einstückig mit dem Sensorgehäuse (3) verbunden ist, wobei der auf das zweite Gehäuse (2) gerichtete Endabschnitt des Gehäuserahmens (4) in eine elastische oder plastische Dichtmasse (8) eintaucht, die vorzugsweise in einem nutförmigen Vorsprung des zweiten Gehäuses (2) eingebettet ist.

7. Drucksteuergerät nach Anspruch 5, **dadurch gekennzeichnet, daß** das Sensorgehäuse (3) als rechteckförmiges Blockgehäuse ausgeführt ist, an dessen vom ersten Gehäuse (1) abgewandte plane Stirnfläche die Dichtung (11), wenigstens das Druckmesselement (6) und die mit dem Druckmesselement (6) elektrisch verbundene Platine (7) angeordnet ist.

8. Drucksteuergerät nach Anspruch 7, **dadurch gekennzeichnet, daß** in dem Sensorgehäuse (3) mehrere Druckrohre (12) nebeneinander in einer Reihe befestigt sind, die im Bereich einer am ersten Gehäuse (1) anliegenden Flanschfläche des Sensorgehäuses (3) hervorstehen, wobei die Druckrohre (12) mit ihren aus dem Sensorgehäuse (3) hervorstehenden Rohrabschnitten (14) innerhalb mehrerer Druckkanäle (13) des ersten Gehäuse (1) flüssigkeitsdicht mit dem ersten Gehäuse (1) verbunden sind.

9. Drucksteuergerät nach Anspruch 8, **dadurch gekennzeichnet, daß** der Werkstoff der Rohrabschnitte (14) eine größere Härte aufweist als das Material des ersten Gehäuses (1), und dass die Rohrabschnitte (14) mehrere Stufenabschnitte (18) zur Verdrängung des weicheren Material des ersten Gehäuses (1) in mehrere Ausnehmungen (16) der Rohrabschnitte (14) aufweisen, die eine unlösbare, flüssigkeitsdichte Verbindung des Sensorgehäuses (3) mit dem ersten Gehäuse (1) herstellen.

10. Drucksteuergerät nach Anspruch 9, **dadurch gekennzeichnet, dass** der Werkstoff des Sensorgehäuses (3) eine geringere Härte aufweist als das Material der Druckrohre (12), die mehrere Stufenabschnitte (18) zur Verdrängung des weicheren Materials des Sensorgehäuses (3) in mehrere Ausnehmungen (16) an den Druckrohren (12) aufweisen, die unlösbar und flüssigkeitsdicht mit dem Sensorgehäuse (3) verbunden sind.

11. Drucksteuergerät nach Anspruch 8, **dadurch gekennzeichnet, dass** die Druckrohre (12) aus Stahl sowie das erste Gehäuse (1) und das Sensorgehäuse (3) aus einer Leichtmetalllegierung bestehen.

## Claims

1. A pressure controller, in particular for a slip-controlled brake system in a motor vehicle, which is equipped with a first housing (1) for the accommodation of several pressure control valves and with a second housing (2) arranged on the first housing (1) and accommodating electric and/or electronic components, which electrically contact several pressure sensors arranged in a sensor housing (3) when the second housing (2) is placed on the first housing (1), with at least one means that is arranged between the sensor housing (3) and the second housing (2) for the compensation of manufacturing and assembly tolerances, the means being designed as an elastic electric contact (5), which is arranged between the sensor housing (3) and the second housing (2) in a radially displaceable manner, with a housing frame (4) that is arranged between the sensor housing (3) and the second housing (2) for sealing the elastic electric contact (5), which is mechanically preloaded and abuts on a contact surface of a circuit board (7) within the housing frame (4),
**characterized in that** the circuit board (7) accommodates the electric and/or electronic components (15) of a pressure signal evaluating circuit necessary for at least one pressure measuring element (6).

2. The pressure controller as claimed in claim 1,
**characterized in that** the electric contact (5) is configured as a spring contact.

3. The pressure controller as claimed in claim 1,
**characterized in that** the housing frame (4) with its end area remote from the sensor housing (3) is immersed into an elastic or plastic sealing material (8), which preferably compensates manufacturing and/or assembly tolerances and is either injection-molded or inserted within a projection (9) arranged at the second housing (2), in particular into a housing groove (10) of the second housing (2), the width of the groove being dimensioned larger than the wall thickness of the housing frame (4) by a tolerance rate required for compensating assembly and manufacturing tolerances.

4. The pressure controller as claimed in claim 1,
**characterized in that** the housing frame (4) is designed as an independently manageable component, the end area of which remote from the second housing (2) bears against a circumferential seal (11) at the outside edge of the sensor housing (3).

5. The pressure controller as claimed in claim 1,
**characterized in that** the housing frame (4) is molecularly interfaced with the second housing (2), and the housing frame (4) radially displaceably abuts on a seal (11) at the sensor housing (3) that is preferably configured as a flat packing.

6. The pressure controller as claimed in claim 1,
**characterized in that** the housing frame (4) is integrally connected to the sensor housing (3), and the end portion of the housing frame (4) directed to the second housing (2) is immersed into an elastic or plastic sealing material (8) that is preferably embedded into a groove-shaped projection of the second housing (2).

7. The pressure controller as claimed in claim 5,
**characterized in that** the sensor housing (3) is designed as a rectangular block-shaped housing, at the plane end surface of which that is remote from the first housing (1) there is arranged the seal (11), at least one pressure measuring element (6) and the circuit board (7) that is electrically connected to the pressure measuring element (6).

8. The pressure controller as claimed in claim 7,
**characterized in that** several pressure pipes (12) are attached in the sensor housing (3) side by side in a row, said pressure pipes projecting in the area of a flange surface of the sensor housing (3) that abuts on the first housing (1), and the pressure pipes (12) with their pipe portions (14) projecting from the sensor housing (3) are fluid-tightly connected to the first housing (1) within several pressure channels (13) of the first housing (1).

9. The pressure controller as claimed in claim 8,
**characterized in that** the material of the pipe portions (14) exhibits a greater hardness than the material of the first housing (1), and **in that** the pipe portions (14) have several stepped portions (18) for displacing the softer material of the first housing (1) into several recesses (16) of the pipe portions (14), which provide an undetachable, fluid-tight connection between the sensor housing (3) and the first housing (1).

10. The pressure controller as claimed in claim 9,
**characterized in that** the material of the sensor housing (3) has a hardness lower than that of the material of the pressure pipes (12), which are provided with several stepped portions (18) for displacing the softer material of the sensor housing (3) into several recesses (16) at the pressure pipes (12), which are undetachably and fluid-tightly connected to the sensor housing (3).

11. The pressure controller as claimed in claim 8,
**characterized in that** the pressure pipes (12) are made of steel, while the first housing (1) and the sensor housing (3) are manufactured using a light-metal alloy.

## Revendications

1. Appareil de commande de pression, en particulier pour un système de frein à glissement contrôlé dans un véhicule automobile, qui est muni d'un premier boîtier (1) pour recevoir plusieurs soupapes de commande et d'un deuxième boîtier (2) agencé sur le premier boîtier (1), qui reçoit des composants électriques et/ou électroniques, qui font contact de manière électrique avec plusieurs capteurs de pression agencés dans un boîtier de capteur (3) lorsque le deuxième boîtier (2) est placé sur le premier boîtier (1), avec au moins un moyen de compensation des tolérances de fabrication et de montage agencé entre le boîtier de capteur (3) et le deuxième boîtier (2), qui est réalisé comme un contact électrique élastique (5), qui est agencé entre le boîtier de capteur (3) et le deuxième boîtier (2) de manière déplaçable radialement, avec un cadre de boîtier (4) agencé entre le boîtier de capteur (3) et le deuxième boîtier (2) pour fermer de manière étanche le contact électrique élastique (5), qui repose de manière pré-contrainte mécaniquement à l'intérieur du cadre de boîtier (4) sur une surface de contact d'une carte de circuits imprimés (7), **caractérisé en ce que** la carte de circuits imprimés (7) reçoit les composants électriques et/ou électroniques (15) d'un circuit d'évaluation de signal de pression nécessaires pour au moins un élément de mesure de pression (6).

2. Appareil de commande de pression selon la revendication 1, **caractérisé en ce que** le contact électrique (5) est réalisé comme un contact à ressort.

3. Appareil de commande de pression selon la revendication 1, **caractérisé en ce que** le cadre de boîtier (4) possède une région d'extrémité opposée au boîtier de capteur (3) qui est immergée dans un matériau d'étanchéité plastique ou élastique (8) qui compense des tolérances de fabrication et/ou de montage, qui est moulé par injection ou inséré à l'intérieur d'une saillie (9) agencée sur le deuxième boîtier (2), en particulier dans une rainure de boîtier (10) du deuxième boîtier (2), dont la largeur de rainure est dimensionnée plus grande que l'épaisseur de paroi du cadre de boîtier (4) avec un rapport de tolérance nécessaire pour compenser des tolérances de fabrication et de montage.

4. Appareil de commande de pression selon la revendication 1, **caractérisé en ce que** le cadre de boîtier (4) est conçu comme un composant manipulable indépendamment, dont la région d'extrémité opposée au deuxième boîtier (2) repose sur un joint d'étanchéité (11) circonférentiel sur le côté extérieur du boîtier de capteur (3).

5. Appareil de commande de pression selon la revendication 1, **caractérisé en ce que** le cadre de boîtier (4) est relié en revenu de matière avec le deuxième boîtier (2), dans lequel le cadre de boîtier (4) repose de manière déplaçable radialement sur un joint d'étanchéité (11) dans le boîtier de capteur (3), qui est réalisé de préférence comme un joint d'étanchéité plat.

6. Appareil de commande de pression selon la revendication 1, **caractérisé en ce que** le cadre de boîtier (4) est relié d'un seul tenant avec le boîtier de capteur (3), dans lequel la partie d'extrémité du cadre de boîtier (4) orienté vers le deuxième boîtier (2) est noyé dans un matériau d'étanchéité élastique ou plastique (8), qui est noyé de préférence dans une saillie en forme de rainure du deuxième boîtier (2).

7. Appareil de commande de pression selon la revendication 5, **caractérisé en ce que** le boîtier de capteur (3) est réalisé comme un boîtier bloc de forme rectangulaire, à la surface d'extrémité plane opposée au premier boîtier (1) duquel est agencé le joint d'étanchéité (11), au moins l'élément de mesure de pression (6) et la carte de circuits imprimés reliée de manière (7) électrique à l'élément de mesure de pression (6).

8. Appareil de commande de pression selon la revendication 7, **caractérisé en ce que** dans le boîtier de capteur (3) plusieurs conduites de pression (12) sont fixées côte à côte en série, qui font saillie dans une région d'une surface de bride du boîtier de capteur (3) reposant sur le premier boîtier (1), dans lequel les conduites de pression (12) avec des parties de conduite (14) faisant saillie du boîtier de capteur (3) sont reliées au premier boîtier (1) de manière étanche au liquide à l'intérieur de plusieurs canaux de pression (13) du premier boîtier (1).

9. Appareil de commande de pression selon la revendication 8, **caractérisé en ce que** le matériau de la partie de conduite (14) présente une rigidité supérieure à celle du matériau du premier boîtier (1), et **en ce que** les parties de conduite (14) présentent plusieurs parties étagées (18) pour déplacer le matériau plus souple du premier boîtier (1) dans plusieurs évidements (16) des parties de conduite (14), qui fournissent une liaison étanche au liquide non détachable du boîtier de capteur (3) avec le premier boîtier (1).

10. Appareil de commande de pression selon la revendication 9, **caractérisé en ce que** le matériau du boîtier de capteur (3) présente une dureté inférieure à celle du matériau des conduites de pression (12), qui présentent plusieurs parties étagées (18) pour déplacer le matériau plus souple du boîtier de capteur (3) dans plusieurs évidements (16) des conduites de pression (12), qui sont reliées de manière étanche au liquide et non détachable avec le boîtier de capteur (3).

11. Appareil de commande de pression selon la revendication 8, **caractérisé en ce que** les conduites de pression (12) sont constituées d'acier de même que le premier boîtier (1) et le boîtier de capteur (3) sont constitués d'un alliage de métal léger.
